# EUROPÄISCHE PATENTSCHRIFT

(11) **EP 4 334 242 B1**
(45) Veröffentlichungstag und Bekanntmachung des Hinweises auf die Patenterteilung: **06.08.2025**
(21) Anmeldenummer: 22797282.5
(22) Anmeldetag: 22.09.2022
(51) Int. Cl.: C01B 3/02, B01D 53/047, C01C 1/04, C25B 1/04

(54) **VERFAHREN ZUR AMMONIAKSYNTHESE UND ANLAGE ZUR HERSTELLUNG VON AMMONIAK**
METHOD FOR SYNTHESIZING AMMONIA AND PLANT FOR PRODUCING AMMONIA
PROCÉDÉ DE SYNTHÈSE D'AMMONIAC ET INSTALLATION DE PRODUCTION D'AMMONIAC

(30) Priorität: 22.09.2021 DE 102021210549; 22.09.2021 BE 202105747
(43) Veröffentlichungstag der Anmeldung: 13.03.2024
(73) Patentinhaber: thyssenkrupp Uhde GmbH, 44141 Dortmund (DE); thyssenkrupp AG, 45143 Essen (DE)
(72) Erfinder: KELLER, Patrick, 44536 Lünen (DE)
(74) Vertreter: thyssenkrupp Intellectual Property GmbH
(86) Internationale Anmeldenummer: PCT/EP2022/076432
(87) Internationale Veröffentlichungsnummer: WO 2023/046860

(56) Entgegenhaltungen:
- CN-B- 101 580 234
- US-A- 5 736 116
- US-A1- 2021 198 104
- ANONYMOUS ED - DARL KUHN: "Use of ITM Membrane in Ammonia Syngas Production", IP.COM, IP.COM INC., WEST HENRIETTA, NY, US, 12 September 2003 (2003-09-12), XP013012774, ISSN: 1533-0001

## Beschreibung

Die Erfindung betrifft ein Verfahren zur Herstellung von Ammoniak, wobei ein Kohlenwasserstoffgemisch und Wasserdampf einem Primärreformer zugeführt werden, wobei das Kohlenwasserstoffgemisch und der Wasserdampf im Primärreformer zumindest teilweise zu Kohlenmonoxid und Wasserstoff umgesetzt werden, wobei das Gasgemisch aus dem Primärreformer in einen Sekundärreformer geleitet wird, wobei dem Sekundärreformer Prozessluft, mindestens umfassend Sauerstoff und Stickstoff, zugeführt wird, sodass nicht umgesetzter Kohlenwasserstoff zu Kohlenmonoxid und Wasserstoff umgesetzt wird.

Daneben betrifft die Erfindung eine Anlage zur Herstellung von Ammoniak mit mindestens einem Primärreformer zur Umsetzung eines Kohlenwasserstoffgemisches und Wasserdampf zumindest teilweise zu Kohlenmonoxid und Wasserstoff, mit einem Sekundärreformer zur Umsetzung von nicht umgesetztem Kohlenwasserstoff zu Kohlenmonoxid und Wasserstoff, wobei der Sekundärreformer strömungstechnisch mit dem Primärreformer verbunden ist, wobei der Sekundärreformer strömungstechnisch mit einer Zuführung von Prozessluft verbunden ist, wobei die Prozessluft mindestens Sauerstoff und Stickstoff umfasst.

Ammoniak ist einer der wichtigsten Grundstoffe. Die Weltjahresproduktion beträgt derzeit etwa 170 Millionen Tonnen. Der größte Teil des Ammoniaks wird zur Herstellung von Düngemitteln verwendet. Die großtechnische Herstellung verwendet heute weitgehend die von Haber und Bosch zu Beginn des 20. Jahrhunderts entwickelte Hochdrucksynthese in Festbettreaktoren mit Eisen als katalytisch aktiver Hauptkomponente, basierend auf einem stöchiometrisch zusammengesetzten Synthesegas mit den Hauptkomponenten Wasserstoff und Stickstoff. Die Erzeugung des Synthesegases erfolgt vorwiegend über die Erdgasroute. Nachteilig sind hierbei die großen Mengen an anfallendem Kohlendioxid.

Durch den exothermen Charakter der Ammoniak-Bildungsreaktion entstehen im Prozessverlauf verhältnismäßig große Wärmemengen. Für einen guten spezifischen Energieverbrauch des Gesamtprozesses müssen sie möglichst effizient genutzt werden. Generell ist die Abwärmenutzung mit thermodynamisch unvermeidbaren Verlusten verbunden. Es hat deshalb nicht an Versuchen gefehlt, Alternativen zum Haber-Bosch-Verfahren zu entwickeln, die ohne die hohen Temperaturen und Drücke arbeiten. Im Haber-Bosch-Verfahren wird die fundamentale Schwierigkeit der Aktivierung des sehr reaktionsträgen Stickstoff-Moleküls durch den Einsatz spezifisch sehr aktiver Katalysatoren in Kombination mit verhältnismäßig hohen Temperaturen überwunden. Eine Alternative für die Bereitstellung der erforderlichen Aktivierungsenergie ist der Einsatz elektrischer Energie.

Zur Einsparung von Kohlendioxid gibt es Überlegungen, die Rohstoffe, insbesondere Wasserstoff, nicht oder nicht komplett über die Erdgasroute zu erhalten. Die EP 2 589 426 A1 offenbart beispielsweise ein Verfahren zur Herstellung von Ammoniak, bei dem Wasserstoff aus der Elektrolyse von Wasser gewonnen wird. Stickstoff kann beispielsweise aus einer kryogenen Luftzerlegungsanlage gewonnen werden. Die Stoffe werden miteinander vermischt und auf einen Druck im Bereich von 80 bis 300 bar verdichtet.

Aus US 2021/198104 A1 ist ein Verfahren zur Herstellung von Synthesegas für die Ammoniakherstellung bekannt, in welchem in einer Lufttrennungseinheit Luft in einen Sauerstoff enthaltenden Teilstrom und einen Stickstoff enthaltenden Teilstrom aufgetrennt wird (beispielsweise in einer kryogenen fraktionierten Destillation, einer Membrantrennung oder einer Druckwechseladsorption) und zudem mittels Elektrolyse ein Wasserstoff enthaltender Strom erzeugt wird. Zusätzlich zu dem Wasserstoff enthaltenden Strom wird bei der Elektrolyse ein weiterer Strom erzeugt, der Sauerstoff enthält. Der Sauerstoff enthaltende Strom aus der Elektrolyse, der Sauerstoff enthaltende Teilstrom aus der Lufttrennung und ein Ausgangsmaterial auf Kohlenwasserstoffbasis werden einem autothermen Reformer oder einem Sekundärreformer zugeführt, aus dessen Produktgasmischung Wasserstoff für die Synthese von Ammoniak gewonnen wird. Der Stickstoff enthaltende Teilstrom und der im Reformer erhaltene Wasserstoff (gegebenenfalls mit dem Wasserstoff enthaltenden Strom aus der Elektrolyse) werden in einem Stoffmengenverhältnis von etwa 1 : 3 vereinigt und dem Reaktor zugeführt. Für den autothermen Reformer wie auch für den Sekundärreformer wird ein Gasgemisch benötigt, dessen Sauerstoffgehalt relativ gesehen höher ist als dessen Stickstoffgehalt, weshalb der in der Elektrolyse erzeugte Sauerstoff eingesetzt wird, um die Prozessluft mit Sauerstoff anzureichern. Dadurch kann die Reformierung mit einem besonders hohen Sauerstoffgehalt durchgeführt werden und Stickstoff erst nach dem Reformieren zugesetzt werden (gegebenenfalls zusammen mit dem Wasserstoff enthaltenden Gasstrom aus der Elektrolyse). Durch die Verwendung des in der Wasserelektrolyse erzeugten Sauerstoffs für die partielle Oxidation im Reformer lässt sich dann die Größe der Lufttrennungseinheit verringern.

In CN 101 580 234 B ist ein Verfahren zur Herstellung von Ammoniak beschrieben, in welchem Methan in einem Dampfreformer umgesetzt und das so erhaltene Produkt in einem nachgeschalteten zweiten Reformer mit verdichteter Prozessluft zur Reaktion gebracht wird. Im Dampfreformer soll hierfür mit Sauerstoff angereicherte Prozessluft eingesetzt werden, um eine höhere Flammentemperatur zu erzielen, während im zweiten Reformer mit Stickstoff angereicherte Prozessluft eingesetzt wird, um die Menge an Wasserstoff zu verringern, der nach der Erzeugung im Dampfreformer im zweiten Reformer verbrannt wird. Um dennoch die hohe Effizienz der Konversion von Methan im zweiten Reformer gewährleisten zu können, wird stattdessen die Prozessluft im Vorwärmer stärker erwärmt und damit die Wärmelast der zweistufigen Reformierung vom zweiten Reformer in den Vorwärmer verlagert, der von Rauchgas erwärmt wird, das bei der Verbrennung von Erdgas oder Kohle und anderen Brennstoffen entsteht. Für das Verfahren wird insgesamt zunächst Luft verdichtet und der so erhaltene komprimierte Luftstrom in zwei Teilströme aufgeteilt. Aus dem ersten Teilstrom wird mit Hilfe einer Hohlfasermembrantrennung ein mit Sauerstoff angereicherter Luftanteil von einem mit Stickstoff angereicherten Luftanteil abgetrennt. Der mit Sauerstoff angereicherte Luftanteil wird dem ersten Reformer zugeleitet, wo er dazu dient, bei der Verbrennung von Erdgas den Luftüberschuss zu verringern und in der ersten Reformerstufe die Flammentemperatur zu erhöhen. Der zweite Teilstrom des komprimierten Luftstroms wird mit dem mit Stickstoff angereicherten Luftanteil aus dem ersten Teilstrom wiedervereinigt und der vereinigte Prozessluftstrom in dem Vorwärmer erhitzt, bevor er in den zweiten Reformer eingeleitet wird. Dadurch wird im zweiten Reformer weniger Wasserstoff verbrannt, gleichzeitig wird die eingespeiste Prozessluft im Vorwärmer stärker erhitzt, wodurch letztlich im zweiten Reformer mehr Wasserstoff erhalten wird, da dort weniger Wasserstoff verbrannt wird. Über den mit Stickstoff angereicherten Luftanteil lässt sich das gewünschte Verhältnis von Wasserstoff zu Stickstoff also leicht einstellen, so dass die eingesetzten Rohstoffe effizienter genutzt werden; aufgrund des höheren Brennstoffbedarfs beim Vorwärmen der Prozessluft vor dem zweiten Reformer führt dies allerdings auch zu höheren Kohlendioxidemissionen.

Die Erfindung behandelt den Prozess, in dem ein Teil des Wasserstoffs über die Erdgasroute und ein anderer Teil aus einer externen Quelle (externer Wasserstoff) erhalten wird, so dass insgesamt also weniger Wasserstoff über die Erdgasroute erzeugt werden muss. Das Problem dabei ist, dass dann die Menge an Wasserstoff, die bei der Erzeugung von Synthesegas im sogenannten Frontend einer Ammoniakanlage erzeugt wird, zwar abnimmt, die Menge an Stickstoff, die in den Sekundärreformer zuzugeben ist, in erster Näherung aber konstant bleiben muss. Der Stickstoff wird als Prozessluft zugeführt, die mindestens Stickstoff und Sauerstoff enthält. Damit wird aber dem Sekundärreformer zu viel Sauerstoff im Verhältnis zum Wasserstoff zugeführt, was zur unerwünschten Verbrennung vom frischgewonnenen Wasserstoff führt. Um diesem Effekt etwas entgegenzusetzen, müsste ebenfalls der Anteil am unreformierten Methan im Sekundärreformer erhöht werden, damit der überschüssige Sauerstoff bei der Umsetzung des Methans verbraucht würde. Der Anteil des unreformierten Methans im Sekundärreformer ließe sich erhöhen, indem man die Feuerungsleistung des Primärreformers stark reduzieren würde. Dadurch würde der Reformierungsvorgang stark vom Primärreformer in den Sekundärreformer verschoben. Mit der nun zur Verfügung stehenden Wärmemenge und bei dem dadurch resultierenden Temperaturniveau wäre es allerdings nicht mehr möglich, alle zugeführten Ströme in einem Rauchgaskanal im Frontend bestimmungsgemäß zu erwärmen.

Der Erfindung liegt daher die Aufgabe zugrunde, ein Verfahren zur Herstellung von Ammoniak sowie eine Ammoniakanlage zur Verfügung zu stellen, bei denen die Feuerungsleistung des Primärreformers auch bei der Reduktion der im Frontend zu produzierenden Wasserstoffmenge nahezu unvermindert bleibt.

Diese Aufgabe wird zunächst durch ein Verfahren mit den Merkmalen des Patentanspruchs 1 dadurch gelöst, dass der Sauerstoffgehalt der Prozessluft verringert wird, bevor die Prozessluft in den Sekundärreformer geleitet wird. Durch Abreicherung von Sauerstoff in der Prozessluft wird die freiwerdende Wärmemenge im Sekundärreformer reduziert. Bei konstanter Austrittstemperatur des Sekundärreformers ist es somit möglich, die Austrittstemperatur des Primärreformers zu steigern, zum einen durch die größere Feuerungsleistung, aber auch durch die zur Verfügung stehende Wärmemenge und das Temperaturniveau im vorgenannten Rauchgaskanal. Der Sauerstoffgehalt des Prozessluftstroms kann beispielsweise durch eine Stickstoff-Druckwechseladsorption verringert werden.

Bei dem erfindungsgemäßen Verfahren ist vorgesehen, dass das Gasgemisch aus dem Sekundärreformer (etwa über eine Ableitung) nach weiterer Aufbereitung (Aufarbeitung, Aufreinigung) einem Reaktor zugeführt wird, dass in dem Reaktor Stickstoff und Wasserstoff zumindest teilweise zu Ammoniak umgesetzt werden und dass zusätzlich externer Wasserstoff dem Reaktor zugeführt wird. Der externe Wasserstoff kann direkt in den Reaktor eingeleitet werden. Stattdessen kann auch das Gasgemisch aus dem Sekundärreformer nach der weiteren Aufreinigung mit dem externen Wasserstoff zusammengeführt und das so erhaltene Gesamtgemisch dann in den Reaktor eingeleitet werden. Dazu kann eine weitere Mischeinheit vorgesehen sein, die stromaufwärts vor dem Reaktor angeordnet ist. Diese ist aber nicht zwingend erforderlich.

Die weitere Aufbereitung kann insbesondere die Konvertierung des übrigen Kohlenmonoxids zu Kohlendioxid mittels Wasserdampf und das Abtrennen des so erhaltenen Kohlendioxids aus dem Rohgas beinhalten, zum Beispiel durch eine Wäsche oder eine Absorption, gegebenenfalls auch ein Verringern aller sauerstoffhaltigen Bestandteile auf ein dafür vorgesehenes Minimum.

Vorteilhafterweise ist bei einer Ausgestaltung des erfindungsgemäßen Verfahrens vorgesehen, dass der externe Wasserstoff mittels Elektrolyse hergestellt wird. Der durch Elektrolyse hergestellte Wasserstoff kann zu einer Verbesserung der Umweltbilanz des Verfahrens und somit des Betreibens einer Ammoniakanlage beitragen, sofern zur Nutzung der Elektrolyse "grüner" (regenerativ erzeugter) und günstiger Strom zur Verfügung steht. Ein weiterer Vorteil des erfindungsgemäßen Verfahrens liegt darin, dass eine gewisse Hybridfahrweise einer Ammoniakanlage möglich ist. Sofern sauberer Strom zur Verfügung steht, kann der Wasserstoff durch Elektrolyse beispielsweise direkt in der Nähe einer Ammoniakanlage produziert werden. Entsprechend kann die Abreicherung des Sauerstoffgehaltes der Prozessluft an den aus der Elektrolyse zur Verfügung stehenden Wasserstoffanteil oder an den im Frontend der Ammoniakanlage reduzierten Wasserstoffanteil angepasst werden.

Bei einer weiteren Ausgestaltung des erfindungsgemäßen Verfahrens ist vorgesehen, dass die Prozessluft stromaufwärts vor dem Sekundärreformer in mindestens einen ersten Teilstrom und einen zweiten Teilstrom aufgeteilt wird, dass der Sauerstoffgehalt des ersten Teilstroms reduziert wird und dass der erste Teilstrom und der zweite Teilstrom stromaufwärts vor dem Sekundärreformer zusammengeführt werden. Auf diese Weise kann der Sauerstoffgehalt des Prozessluftstroms ideal eingestellt werden. Für bestehende (umzurüstende) Anlagen kann der zweite Teilstrom dem ursprünglichen Strömungspfad folgen, während lediglich eine Abzweigung in das bestehende Rohrleitungssystem eingebaut werden muss, um den ersten Teilstrom zu behandeln.

Um das Verfahren möglichst vorteilhaft zu betreiben, ist bei einer weiteren Ausgestaltung der Erfindung vorgesehen, dass der Anteil von Stickstoff im ersten Teilstrom in Bezug auf die Gesamtmenge an Stickstoff im Reaktor mindestens 43 % des Anteils (Stoffmengenanteils) von externem Wasserstoff in Bezug auf die Gesamtmenge an Wasserstoff im Reaktor entspricht. Um eine ausreichende Feuerung der Primärreformers zu gewährleisten, ist empfehlenswert, dass die Kapazität der Stickstoff-Druckwechseladsorption für den ersten Teilstrom am Gesamtstickstoffbedarf (im Make-Up-Strom zum Synthesegaskompressor) mindestens die Hälfte des Anteils an externem ("grünen", also (vollständig) mit Hilfe von regenerativen Energien gewonnenen) Wasserstoff betragen muss. Wird also zum Beispiel 30 % des Wasserstoffs aus dem Frontend durch externen Wasserstoff ersetzt, so sollte die Kapazität der Stickstoff-Druckwechseladsorption bei mindestens 13,3 % des Gesamtstickstoffes liegen.

Zusätzlich ist bei einer weiteren Ausgestaltung des erfindungsgemäßen Verfahrens eine mehrstufige Verdichtung der Prozessluft vorgesehen, wobei die Prozessluft zwischen zwei Verdichtungsstufen in mindestens den ersten Teilstrom und den zweiten Teilstrom aufgeteilt wird. Der erste Teilstrom wird folglich nach einer bezüglich des Druckniveaus geeigneten Stufe des Prozessluftverdichters abgezweigt, um eine Abreicherung von Sauerstoff zu realisieren.

Zwischen den Verdichtungsstufen ist vorzugsweise bei einer weiteren Ausgestaltung der Erfindung vorgesehen, dass die Prozessluft bei einem Druckbereich von 5 bis 15 bara in mindestens den ersten Teilstrom und den zweiten Teilstrom aufgeteilt wird.

Weiter kann bei einer weiteren Ausgestaltung des Verfahrens vorgesehen sein, dass der erste Teilstrom und der zweite Teilstrom vor der letzten Verdichtungsstufe wieder zusammengeführt werden. Nach der letzten Verdichtungsstufe wird die mit Stickstoff angereicherte Luft dem Sekundärreformer zugeführt.

Bei einer besonders vorteilhaften Ausgestaltung des erfindungsgemäßen Verfahrens ist vorgesehen, dass der erste Teilstrom einer Stickstoff-Druckwechseladsorption zugeführt wird. Bei dem physikalischen Trennverfahren der Druckwechseladsorption (pressure swing adsorption, PSA) werden einzelne Gase aus einem Gasgemisch isoliert. Das zugrundeliegende Prinzip beruht darauf, dass sich Gasmoleküle an Festkörpern anlagern können (genauer gesagt, an deren Oberfläche). Dieser Festkörper, auch Adsorbens genannt, ist entsprechend für die jeweilige Anwendung ausgelegt, damit entweder nur die jeweils in der Anwendung wichtige Komponente adsorbiert wird oder nur diese Komponente das Adsorbens durchdringen kann. Bei der Stickstoff-Druckwechseladsorption von Prozessluft, die beispielsweise Umgebungsluft sein kann und mindestens Stickstoff und Sauerstoff enthält, kann das (in Bezug auf den kinetischen Durchmesser) größere Stickstoffmolekül das Adsorbens durchdringen, während in den Poren das kleinere Sauerstoffmolekül in die Poren des Adsorbens eindringt. Für diesen Fall kann als Adsorbens vorzugsweise ein Kohlenstoffmolekularsieb verwendet werden.

Die Druckwechseladsorption lässt sich in vier Schritte aufteilen, die zyklisch ablaufen: Zunächst wird das Rohgas unter Druck in eine Adsorptionsmittelschüttung geleitet. Sauerstoff lagert sich an der Oberfläche des Adsorbens an oder dringt in die Poren ein, während Stickstoff die Schüttung passieren kann. Diese Anlagerung kann bis zum Erreichen eines Gleichgewichts erfolgen. Daran anschließend wird der Druck abgesenkt, wodurch eine Regeneration des Adsorbens eingeleitet wird. Durch die Druckabsenkung kann sich der adsorbierte Sauerstoff von der Oberfläche wieder ablösen und ausgeleitet werden. Dazu erfolgt in einem weiteren Schritt eine Spülung des Adsorbens mit dem Produktgas. Im Anschluss erfolgt ein erneuter Druckaufbau, bis die nötigen Voraussetzungen für die Adsorption wieder erfüllt sind.

Vorteilhafterweise ist bei einer weiteren Ausgestaltung des Verfahrens vorgesehen, dass der erste Teilstrom nach der Stickstoff-Druckwechseladsorption einen Massenanteil von Stickstoff im Bereich von 0,9 bis 1,0 (entsprechend 90 bis 100 %), vorzugsweise von 0,95 bis 0,99 (entsprechend 95 bis 99 %) aufweist. Für Stickstoff und Sauerstoff, deren Massen sich um lediglich 12,5 % unterscheiden, ist der Massenanteil in erster Näherung identisch mit dem Stoffmengenanteil (in mol%).

Die vorgenannte Aufgabe wird außerdem gelöst von einer Anlage zur Herstellung von Ammoniak mit mindestens einem Primärreformer zur Umsetzung eines Kohlenwasserstoffgemisches und Wasserdampf zumindest teilweise zu Kohlenmonoxid und Wasserstoff, mit einem Sekundärreformer zur Umsetzung von nicht umgesetztem Kohlenwasserstoff zu Kohlenmonoxid und Wasserstoff und mit einem Reaktor zum Umsetzen von Stickstoff und Wasserstoff zumindest teilweise zu Ammoniak, wobei der Sekundärreformer strömungstechnisch mit dem Primärreformer verbunden ist, wobei der Sekundärreformer strömungstechnisch mit einer Zuführung von Prozessluft verbunden ist, wobei die Prozessluft mindestens Sauerstoff und Stickstoff umfasst, und wobei die Anlage eine Wasserstoff-Zuführung aufweist, über die externer Wasserstoff direkt in den Reaktor eingeleitet wird oder mit dem Gasgemisch aus dem Sekundärreformer zusammengeführt und das so erhaltene Gesamtgemisch dann in den Reaktor eingeleitet wird. Darüber hinaus ist der Sekundärreformer strömungstechnisch mit einer Einrichtung zur Abreicherung von Sauerstoff aus der Prozessluft verbunden.

Der Sekundärreformer muss nicht unmittelbar strömungstechnisch mit der Einrichtung zur Abreicherung von Sauerstoff aus der Prozessluft verbunden sein. Denkbar ist auch, dass weitere Einrichtungen im Strömungspfad zwischen der Einrichtung zur Abreicherung von Sauerstoff aus der Prozessluft und dem Sekundärreformer angeordnet sind.

Mit der erfindungsgemäßen Anlage ist es möglich, ein Verfahren nach einem der Ansprüche 1 bis 9 durchzuführen. Die obigen Ausführungen bezüglich des erfindungsgemäßen Verfahrens gelten analog entsprechend auch für die erfindungsgemäße Anlage zur Herstellung von Ammoniak. Demzufolge weist die Anlage entsprechend zusätzlich einen Reaktor zum Umsetzen von Stickstoff und Wasserstoff zumindest teilweise zu Ammoniak auf (also zum Umsetzen von zumindest einem Teil von Stickstoff und Wasserstoff zu Ammoniak). Der Anlage wird über einen entsprechenden Strömungspfad (Wasserstoff-Zuführung) externer Wasserstoff zugeführt. Die Wasserstoff-Zuführung ist strömungstechnisch mit dem Reaktor verbunden, so dass der externe Wasserstoff direkt in den Reaktor eingeleitet werden kann. Stattdessen kann das Gasgemisch über die Wasserstoff-Zuführung aus dem Sekundärreformer nach einer weiteren Aufarbeitung des Gasgemisches mit dem externen Wasserstoff zusammengeführt und das so erhaltene Gesamtgemisch dann in den Reaktor eingeleitet werden. Dazu kann beispielsweise die Wasserstoff-Zuführung stromabwärts vom Sekundärreformer mit dem Sekundärreformer strömungstechnisch verbunden sein. Dazu kann eine weitere Mischeinheit vorgesehen sein, die stromaufwärts vor dem Reaktor angeordnet ist. Diese ist aber nicht zwingend erforderlich.

Bei einer ersten Ausgestaltung der erfindungsgemäßen Anlage ist vorgesehen, dass die Einrichtung zur Abreicherung von Sauerstoff aus der Prozessluft mindestens eine Stickstoff-Druckwechseladsorption umfasst. Somit kann die Abreicherung von Sauerstoff aus der Prozessluft vorteilhaft durchgeführt werden.

Im Einzelnen gibt es eine Vielzahl von Möglichkeiten, das erfindungsgemäße Verfahren und die erfindungsgemäße Anlage auszugestalten und weiterzubilden. Dazu wird verwiesen sowohl auf die den Patentansprüchen 1 und 10 nachgeordneten Patentansprüche als auch auf die nachfolgende Beschreibung bevorzugter Ausführungsbeispiele in Verbindung mit der Zeichnung. Es zeigen
- Fig. 1: eine schematische Darstellung eines erfindungsgemäßen Verfahrens zur Herstellung von Ammoniak oder von Synthesegas, und
- Fig. 2: eine schematische Darstellung eines Ausführungsbeispiels eines Verfahrens zur Herstellung von Ammoniak.

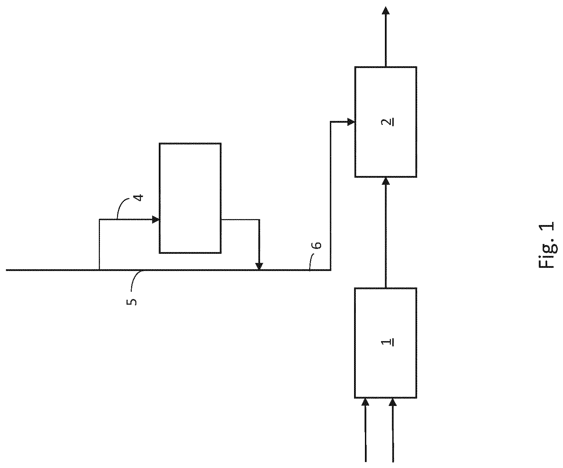

Fig. 1 zeigt eine schematische Darstellung der Durchführung eines Verfahrens zur Herstellung von Ammoniak beziehungsweise zur Herstellung von Synthesegas zur weiteren Umsetzung zu Ammoniak. Dargestellt sind ein Primärreformer 1 und ein Sekundärreformer 2 im sogenannten Frontend einer Ammoniakanlage. Das Synthesegas kann später einem in Fig. 1 nicht dargestellten Reaktor zugeführt werden.

Der Primärreformer 1 wird, insbesondere bei der Herstellung von Ammoniak, zunächst dazu verwendet, um Wasserstoff zu erzeugen. Dazu werden in der Regel ein Kohlenwasserstoffgemisch, häufig Methan, sowie Wasserdampf als Grundstoffe genutzt. Bei der Nutzung von Erdgas, dessen Hauptbestandteil Methan ist, sind auch andere Kohlenwasserstoffe enthalten. Das Erdgas wird vorher entschwefelt und in den Primärreformer geleitet. Bei Temperaturen zwischen 700 bis 850 °C wird Methan mit Wasser unter Druck an einem Nickel-Katalysator zur Reaktion gebracht, sodass Kohlenmonoxid und Wasserstoff entstehen. Das Kohlenmonoxid reagiert zusätzlich mit Wasserdampf weiter zu Kohlendioxid und weiterem Wasserstoff. Im Primärreformer 1 entsteht somit ein Gemisch aus Wasserstoff, Kohlenmonoxid, Kohlendioxid, nicht umgesetzten Kohlenwasserstoffen und Wasserdampf.

Der Sekundärreformer 2 wird dazu verwendet, ein Gemisch von Wasserstoff und Stickstoff für die Ammoniaksynthese bereitzustellen. Das Gasgemisch des Primärreformers wird im Sekundärreformer 2 mit verdichteter Prozessluft vermischt. Bei der Prozessluft handelt es sich vorzugsweise um Umgebungsluft, die in erster Linie Stickstoff und Sauerstoff enthält. Der Sauerstoffanteil der Luft reagiert mit dem Gasgemisch, das dem Sekundärreformer 2 zugeführt wird, wodurch das nicht umgesetzte Methan oder das Kohlenwasserstoffgemisch umgesetzt wird.

Der in der Prozessluft enthaltene Stickstoff reagiert nicht mit den übrigen Stoffen und verbleibt im Gasgemisch. Durch Steuerung der eingeleiteten Luftmenge kann ein gewünschtes Verhältnis zwischen Wasserstoff und Stickstoff bereits im Sekundärreformer 2 eingestellt werden.

Wenn für spätere Reaktionen, insbesondere der Umsetzung von Wasserstoff und Stickstoff zu Ammoniak, zusätzlicher Wasserstoff, beispielsweise grüner Wasserstoff, verwendet wird, ist die benötigte Menge an Wasserstoff aus dem Primärreformer 1 beziehungsweise dem Sekundärreformer 2 geringer. Die Stickstoffmenge aus der Prozessluft bleibt aber in etwa konstant. Bleibt die Sauerstoffmenge in der dem Sekundärreformer zugeführten Luft ebenfalls unverändert, muss der Reformierungsvorgang stark vom Primärreformer 1 in den Sekundärreformer 2 verschoben werden. Dafür muss die Feuerungsleistung des Primärreformers 1 stark abnehmen. Mit der dadurch zur Verfügung stehenden Wärmemenge ist es nicht möglich, alle benötigten weiteren Ströme ausreichend zu erwärmen.

Daher ist bei diesem Ausführungsbeispiel des erfindungsgemäßen Verfahrens vorgesehen, dass die Prozessluft in einen ersten Teilstrom 4 und einen zweiten Teilstrom 5 aufgeteilt wird, bevor sie in den Sekundärreformer 2 über eine Zuführung 6 geleitet wird. Der erste Teilstrom 4 wird dabei einer Einrichtung 7 zur Abreicherung von Sauerstoff zugeführt. Auf diese Weise wird die Feuerungsleistung des Primärreformers 1 erhöht. Der erste Teilstrom 4 und der zweite Teilstrom 5 werden vor Eintritt in den Sekundärreformer 2 wieder zusammengeführt.

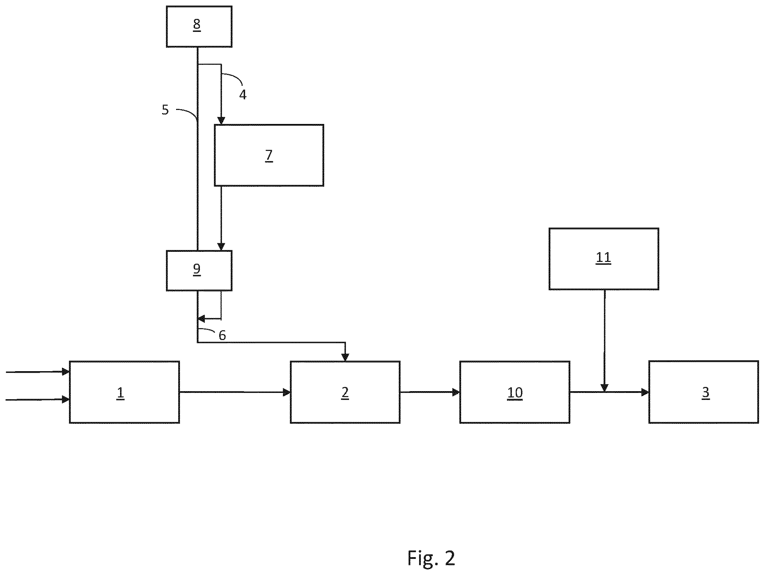

Fig. 2 zeigt ein weiteres Ausführungsbeispiel der Durchführung eines Verfahrens zur Herstellung von Ammoniak. Dabei ist neben dem Primärreformer 1 und dem Sekundärreformer 2 ebenfalls eine Einrichtung 7 zur Abreicherung von Sauerstoff aus der Prozessluft vorgesehen. Die Prozessluft wird über eine mehrstufige Verdichtung auf den für den Sekundärreformer 2 erforderlichen Druck verdichtet. Zwischen einer ersten Verdichtungsstufe 8 und einer zweiten Verdichtungsstufe 9 wird der erste Teilstrom 4 von dem zweiten Teilstrom 5 abgezweigt und der Einrichtung 7 zur Abreicherung von Sauerstoff aus der Prozessluft zugeführt. Bei der zweiten Verdichtungsstufe 9 handelt es sich um die letzte Verdichtungsstufe im gezeigten Prozess.

Bei der Einrichtung 7 zur Abreicherung von Sauerstoff aus der Prozessluft handelt es sich bei diesem Ausführungsbeispiel um eine Stickstoff-Druckwechseladsorption. Bei einer Stickstoff-Druckwechseladsorption werden einzelne Gase aus einem Gasgemisch isoliert. Dabei beruht das Prinzip darauf, dass sich Gasmoleküle an Festkörpern anlagern können. Dieser Festkörper, auch Adsorbens genannt, ist entsprechend für die jeweilige Anwendung ausgelegt, damit nur die jeweils in der Anwendung wichtige Komponente adsorbiert wird oder nur diese das Adsorbens durchdringen kann. Bei der Stickstoff-Druckwechseladsorption von Prozessluft, in diesem Ausführungsbeispiel Umgebungsluft, kann das größere Stickstoffmolekül das Adsorbens durchdringen, während das kleinere Sauerstoffmolekül in die Poren des Adsorbens eindringt. Für diesen Fall wird als Adsorbens ein Kohlenstoffmolekularsieb verwendet.

Da der Stickstoff das Adsorbens durchströmen kann, wird bei der Stickstoff-Druckwechseladsorption ein aufgereinigter Stickstoffstrom erhalten. In diesem Ausführungsbeispiel liegt die Reinheit des die Stickstoff-Druckwechseladsorption verlassenden Stickstoffs bei 95 % bis 100 %. Durch Einstellen der Volumenströme des ersten Teilstroms 4 und des zweiten Teilstroms 5 kann somit der Gesamtstickstoffanteil entsprechend angepasst werden.

Das so im Sekundärreformer 2 entstehende Synthesegas wird zunächst noch aufbereitet, bevor die Ammoniaksynthese durchgeführt werden kann. Dazu wird in dem mit Bezugszeichen 10 benannten Block eine Konvertierung der Kohlenoxide durchgeführt, die ansonsten als Katalysatorgifte wirken und die Katalysatoren bei der Synthese unbrauchbar machen würden. Das übrige Kohlenmonoxid wird zu Kohlendioxid mittels Wasserdampf konvertiert. Das Kohlendioxid wird anschließend aus dem Rohgas abgetrennt, zum Beispiel durch eine Wäsche oder eine Absorption. Anschließend werden alle sauerstoffhaltigen Bestandteile (Kohlenmonoxid, Kohlendioxid, Wasser), die als schädlich für Katalysatoren in der Ammoniaksynthese gelten, auf ein dafür vorgesehenes Minimum reduziert und das sog. Make-Up-Gas wird auf den Synthese-Druck verdichtet.

Bei der anschließenden Ammoniaksynthese im Reaktor 3 werden Wasserstoff und Stickstoff zu Ammoniak umgesetzt. Neben dem Wasserstoff aus der Reformierung, also dem Primärreformer 1 und dem Sekundärreformer 2, wird zusätzlicher Wasserstoff aus einer externen Quelle über eine Wasserstoff-Zuführung in den Reaktor 3 geleitet. Bei dem zusätzlichen Wasserstoff handelt es sich bei diesem Ausführungsbeispiel um aus einer Elektrolyse 11 von Wasser erzeugten Wasserstoff. Die Elektrolyse 11 kann genutzt werden, wenn kostengünstiger Strom zur Verfügung steht, damit die Ammoniakanlage wirtschaftlich genutzt werden kann.

Um das Verfahren möglichst vorteilhaft zu betreiben, entspricht der Anteil von Stickstoff im ersten Teilstrom 4 in Bezug auf die Gesamtmenge an Stickstoff im Reaktor 3 mindestens 43 % des Anteils von externem Wasserstoff in Bezug auf die Gesamtmenge an Wasserstoff im Reaktor 3. Um eine ausreichende Feuerung des Primärreformers zu gewährleisten, ist empfehlenswert, dass die Kapazität des Stickstoffanteils im ersten Teilstrom 4 am Gesamtstickstoffbedarf mindestens 43 % des Anteils an externem (grünen) Wasserstoff beträgt. Werden also zum Beispiel 30 % des Wasserstoffs aus dem Frontend durch externen Wasserstoff aus der Elektrolyse 11 ersetzt, liegt die Kapazität des Stickstoffanteils des ersten Teilstroms bei mindestens 13.3 % des Gesamtstickstoffes.

### Bezugszeichenliste

- (1): Primärreformer
- (2): Sekundärreformer
- (3): Reaktor
- (4): erster Teilstrom
- (5): zweiter Teilstrom
- (6): Zuführung
- (7): Einrichtung zur Abreicherung von Sauerstoff
- (8): erste Verdichtungsstufe
- (9): zweite Verdichtungsstufe
- (10): Aufbereitung
- (11): Elektrolyse

## Patentansprüche

1. Verfahren zur Herstellung von Ammoniak, wobei ein Kohlenwasserstoffgemisch und Wasserdampf einem Primärreformer (1) zugeführt werden, wobei das Kohlenwasserstoffgemisch und der Wasserdampf im Primärreformer (1) zumindest teilweise zu Kohlenmonoxid und Wasserstoff umgesetzt werden, wobei das Gasgemisch aus dem Primärreformer (1) in einen Sekundärreformer (2) geleitet wird, wobei dem Sekundärreformer (2) Prozessluft, mindestens umfassend Sauerstoff und Stickstoff, zugeführt wird, sodass nicht umgesetzter Kohlenwasserstoff zu Kohlenmonoxid und Wasserstoff umgesetzt wird, wobei das Gasgemisch aus dem Sekundärreformer (2) nach weiterer Aufbereitung mit externem Wasserstoff vermischt und einem Reaktor (3) zugeführt wird, in dem Stickstoff und Wasserstoff zumindest teilweise zu Ammoniak umgesetzt werden,
**dadurch gekennzeichnet,**
**dass** der Sauerstoffgehalt der Prozessluft verringert wird, bevor die Prozessluft in den Sekundärreformer (2) geleitet wird.

2. Verfahren nach Anspruch 1, **dadurch gekennzeichnet, dass** der externe Wasserstoff mittels Elektrolyse hergestellt wird.

3. Verfahren nach einem der Ansprüche 1 oder 2, **dadurch gekennzeichnet, dass** die Prozessluft stromaufwärts vor dem Sekundärreformer (2) in mindestens einen ersten Teilstrom (4) und einen zweiten Teilstrom (5) aufgeteilt wird, dass der Sauerstoffgehalt des ersten Teilstroms (4) reduziert wird und dass der erste Teilstrom (4) und der zweite Teilstrom (5) stromaufwärts vor dem Sekundärreformer (2) zusammengeführt werden.

4. Verfahren nach Anspruch 3, **dadurch gekennzeichnet, dass** der Anteil von Stickstoff im ersten Teilstrom (4) in Bezug auf die Gesamtmenge an Stickstoff im Reaktor (3) mindestens 43 % des Anteils von externem Wasserstoff in Bezug auf die Gesamtmenge an Wasserstoff im Reaktor (3) entspricht.

5. Verfahren nach Anspruch 3 oder 4, **dadurch gekennzeichnet, dass** eine mehrstufige Verdichtung der Prozessluft vorgesehen ist und dass die Prozessluft zwischen zwei Verdichtungsstufen in mindestens den ersten Teilstrom (4) und den zweiten Teilstrom (5) aufgeteilt wird.

6. Verfahren nach Anspruch 5, **dadurch gekennzeichnet, dass** die Prozessluft bei einem Druckbereich von 5 bis 15 bara in mindestens den ersten Teilstrom (4) und den zweiten Teilstrom (5) aufgeteilt wird.

7. Verfahren nach Anspruch 5 oder 6, **dadurch gekennzeichnet, dass** der erste Teilstrom (4) und der zweite Teilstrom (5) vor der letzten Verdichtungsstufe wieder zusammengeführt werden.

8. Verfahren nach einem der Ansprüche 3 bis 7, **dadurch gekennzeichnet, dass** der erste Teilstrom (4) einer Stickstoff-Druckwechseladsorption zugeführt wird.

9. Verfahren nach Anspruch 8, **dadurch gekennzeichnet, dass** der erste Teilstrom (4) nach der Stickstoff-Druckwechseladsorption einen Massenanteil von Stickstoff im Bereich von 0,9 bis 1,0 aufweist, bevorzugt 0,95 bis 0,99.

10. Anlage zur Herstellung von Ammoniak mit mindestens einem Primärreformer (1) zur Umsetzung eines Kohlenwasserstoffgemisches und Wasserdampf zumindest teilweise zu Kohlenmonoxid und Wasserstoff, mit einem Sekundärreformer (2) zur Umsetzung von nicht umgesetztem Kohlenwasserstoff zu Kohlenmonoxid und Wasserstoff und mit einem Reaktor (3) zum Umsetzen von Stickstoff und Wasserstoff zumindest teilweise zu Ammoniak,
wobei der Sekundärreformer (2) strömungstechnisch mit dem Primärreformer (1) verbunden ist, wobei der Sekundärreformer (2) strömungstechnisch mit einer Zuführung (6) von Prozessluft verbunden ist, wobei die Prozessluft mindestens Sauerstoff und Stickstoff umfasst, und wobei die Anlage eine Wasserstoff-Zuführung aufweist, über die externer Wasserstoff direkt in den Reaktor (3) eingeleitet wird oder mit dem Gasgemisch aus dem Sekundärreformer (2) zusammengeführt und das so erhaltene Gesamtgemisch dann in den Reaktor (3) eingeleitet wird,
**dadurch gekennzeichnet,**
**dass** der Sekundärreformer (2) strömungstechnisch mit einer Einrichtung (7) zur Abreicherung von Sauerstoff aus der Prozessluft verbunden ist.

11. Anlage nach Anspruch 10, **dadurch gekennzeichnet, dass** die Einrichtung (7) zur Abreicherung von Sauerstoff aus der Prozessluft mindestens eine Stickstoff-Druckwechseladsorption umfasst.

## Claims

1. A process for producing ammonia, wherein a hydrocarbon mixture and steam are supplied to a primary reformer (1), wherein the hydrocarbon mixture and the steam are at least partly converted to carbon monoxide and hydrogen in the primary reformer (1), wherein the gas mixture from the primary reformer (1) is directed into a secondary reformer (2), wherein the secondary reformer (2) is supplied with process air, at least comprising oxygen and nitrogen, such that unconverted hydrocarbon is converted to carbon monoxide and hydrogen, wherein the gas mixture from the secondary reformer (2), after further processing, is mixed with external hydrogen and supplied to a reactor (3) in which nitrogen and hydrogen are at least partly converted to ammonia,
**characterized in that**
the oxygen content of the process air is reduced before the process air is directed into the secondary reformer (2).

2. The process as claimed in claim 1, **characterized in that** the external hydrogen is produced by electrolysis.

3. The process as claimed in either of claims 1 and 2, **characterized in that** the process air, upstream of the secondary reformer (2), is divided into at least a first substream (4) and a second substream (5), **in that** the oxygen content of the first substream (4) is reduced, and **in that** the first substream (4) and the second substream (5) are combined upstream of the secondary reformer (2).

4. The process as claimed in claim 3, **characterized in that** the proportion of nitrogen in the first substream (4), in relation to the total amount of nitrogen in the reactor (3), corresponds to at least 43% of the proportion of external hydrogen in relation to the total amount of hydrogen in the reactor (3).

5. The process as claimed in claim 3 or 4, **characterized in that** a multistage compression of the process air is provided, and **in that** the process air, between two compression stages, is divided into at least the first substream (4) and the second substream (5).

6. The process as claimed in claim 5, **characterized in that** the process air, in a pressure range from 5 to 15 bara, is divided into at least the first substream (4) and the second substream (5).

7. The process as claimed in claim 5 or 6, **characterized in that** the first substream (4) and the second substream (5) are combined again upstream of the last compression stage.

8. The process as claimed in any of claims 3 to 7, **characterized in that** the first substream (4) is supplied to a nitrogen pressure swing adsorption.

9. The process as claimed in claim 8, **characterized in that** the first substream (4) after the nitrogen pressure swing adsorption has a proportion by mass of nitrogen in the range from 0.9 to 1.0, preferably of 0.95 to 0.99.

10. A plant for production of ammonia, having at least a primary reformer (1) for conversion of a hydrocarbon mixture and steam at least partly to carbon monoxide and hydrogen, having a secondary reformer (2) for conversion of unconverted hydrocarbon to carbon monoxide and hydrogen, and having a reactor (3) for conversion of nitrogen and hydrogen at least partly to ammonia,
wherein the secondary reformer (2) is fluidically connected to the primary reformer (1), wherein the secondary reformer (2) is fluidically connected to a supply (6) for process air, wherein the process air comprises at least oxygen and nitrogen, and wherein the plant has a hydrogen supply via which external hydrogen is introduced directly into the reactor (3), or is combined with the gas mixture from the secondary reformer (2) and the overall mixture thus obtained is then introduced into the reactor (3),
**characterized in that**
the secondary reformer (2) is fluidically connected to a device (7) for depletion of oxygen from the process air.

11. The plant as claimed in claim 10, **characterized in that** the device (7) for depletion of oxygen from the process air comprises at least a nitrogen pressure swing adsorption.

## Revendications

1. Procédé de production d'ammoniac, dans lequel un mélange d'hydrocarbures et de la vapeur sont fournis à un reformeur primaire (1), dans lequel le mélange d'hydrocarbures et la vapeur sont au moins partiellement convertis en monoxyde de carbone et en hydrogène dans le reformeur primaire (1), dans lequel le mélange de gaz provenant du reformeur primaire (1) est dirigé vers un reformeur secondaire (2), le reformeur secondaire (2) est alimenté en air de traitement, comprenant au moins de l'oxygène et de l'azote, de sorte que l'hydrocarbure non converti est converti en monoxyde de carbone et en hydrogène, le mélange gazeux du reformeur secondaire (2), après un traitement supplémentaire, étant mélangé à de l'hydrogène externe et alimentant un réacteur (3) dans lequel l'azote et l'hydrogène sont au moins partiellement convertis en ammoniac,
**caractérisé par le fait que**
la teneur en oxygène de l'air de traitement est réduite avant que l'air de traitement ne soit dirigé vers le reformeur secondaire (2).

2. Procédé selon la revendication 1, **caractérisé par le fait que** l'hydrogène externe est produit par électrolyse.

3. Procédé selon l'une des revendications 1 et 2, **caractérisé par le fait que** l'air de traitement, en amont du reformeur secondaire (2), est divisé en au moins un premier sous-flux (4) et un second sous-flux (5), **par le fait que** la teneur en oxygène du premier sous-flux (4) est réduite et **par le fait que** le premier sous-flux (4) et le second sous-flux (5) sont combinés en amont du reformeur secondaire (2).

4. Procédé selon la revendication 3, **caractérisé en ce que** la proportion d'azote dans le premier sous-flux (4), par rapport à la quantité totale d'azote dans le réacteur (3), correspond à au moins 43% de la proportion d'hydrogène externe par rapport à la quantité totale d'hydrogène dans le réacteur (3).

5. Procédé selon la revendication 3 ou 4, **caractérisé par** une compression en plusieurs étapes de l'air de traitement, et par le fait que l'air de traitement, entre deux étapes de compression, est divisé en au moins le premier sous-flux (4) et le second sous-flux (5).

6. Procédé selon la revendication 5, **caractérisé par le fait que** l'air de traitement, dans une plage de pression de 5 à 15 bara, est divisé en au moins le premier sous-flux (4) et le second sous-flux (5).

7. Procédé selon la revendication 5 ou 6, **caractérisé par le fait que** le premier sous-flux (4) et le second sous-flux (5) sont à nouveau combinés en amont du dernier étage de compression.

8. Procédé selon l'une des revendications 3 à 7, **caractérisé par le fait que** le premier flux secondaire (4) est alimenté par une adsorption modulée en pression de l'azote.

9. Procédé selon la revendication 8, **caractérisé par le fait que** le premier flux secondaire (4) après l'adsorption modulée en pression de l'azote a une proportion en masse d'azote comprise entre 0,9 et 1,0, de préférence entre 0,95 et 0,99.

10. Installation pour la production d'ammoniac, comportant au moins un reformeur primaire (1) pour la conversion d'un mélange d'hydrocarbures et de vapeur au moins en partie en monoxyde de carbone et en hydrogène, comportant un reformeur secondaire (2) pour la conversion d'hydrocarbures non convertis en monoxyde de carbone et en hydrogène, et comportant un réacteur (3) pour la conversion de l'azote et de l'hydrogène au moins en partie en ammoniac,
dans lequel le reformeur secondaire (2) est relié fluidiquement au reformeur primaire (1), dans lequel le reformeur secondaire (2) est relié fluidiquement à une alimentation (6) en air de traitement, dans lequel l'air de traitement comprend au moins de l'oxygène et de l'azote, et dans lequel l'installation possède une alimentation en hydrogène par laquelle de l'hydrogène externe est introduit directement dans le réacteur (3), ou est combiné au mélange de gaz provenant du reformeur secondaire (2) et le mélange global ainsi obtenu est ensuite introduit dans le réacteur (3),
**caractérisé par le fait que**
le reformeur secondaire (2) est relié fluidiquement à un dispositif (7) pour l'épuisement de l'oxygène de l'air de traitement.

11. L'installation selon la revendication 10, **caractérisée par le fait que** le dispositif (7) d'appauvrissement en oxygène de l'air de traitement comprend au moins une adsorption modulée en pression de l'azote.
